# EUROPEAN PATENT APPLICATION

(11) **EP 3 141 743 A1**
(43) Date of publication of application: **15.03.2017**
(21) Application number: 15184483.4
(22) Date of filing: 09.09.2015
(51) Int. Cl.: F03D 1/06

(54) **WIND TURBINE HUB ARRANGEMENT**

(71) Applicant: Siemens Aktiengesellschaft, 80333 München (DE)
(72) Inventor: The designation of the inventor has not yet been filed

(57) **Abstract**

The invention relates to a wind turbine hub arrangement, and a wind turbine comprising a hub arrangement.

Wind turbine hub arrangement is disclosed, comprising a hub 1, whereby the hub comprises a connection face 2 to be connected to a drive train of a wind turbine.

The arrangement comprises an adaptor plate 4, whereby a first connection area 5 of the adaptor plate 4 is connected to the connection face 2 of the hub 3, and a second connection area 6 of the adaptor plate 4 is prepared to be connected to the drive train 3 of the wind turbine.

## Description

The invention relates to a wind turbine hub arrangement, and a wind turbine comprising a hub arrangement.

A wind turbine comprises a tower, a nacelle that is arranged on top of the tower and a rotor, that is connected rotatable at the nacelle. The rotor comprises at least one rotor blade that is connected to a hub. The wind interacts with the rotor blade and rotates the rotor. The rotation is transferred from the hub via a drive train to an electrical generator to transform the rotation into electrical energy.

Wind turbines are built in several sizes that are mainly described by their electrical output power. Former smaller wind turbines have a power of several hundred kilowatts, modern wind turbines are built for up to several megawatts.

In addition, there are two main concepts of horizontal axis wind turbines. The first one uses a gear between the rotor and the electrical generator to transform the number of revolutions of the shaft in the drive train. The second one uses the same number of revolutions as generated by the rotor also for the generator. There is no gear between the rotor and the electrical generator, thus the wind turbines are referred to as gearless or direct drive wind turbines.

All the different types of wind turbines are carefully planned and optimized in performance and lifetime. Also the components of the drive train are designed to be optimized for a special type of wind turbine.

For example the hub of a wind turbine is individually developed for a certain type of wind turbine, to fit to the concept of the wind turbine and the drive train. The hub of a wind turbine is a casted hollow body. In modern wind turbines the hub has a diameter of several meters. The hub is designed to comprise a flange connection area to connect a rotor blade, and a flange connection area to connect the hub to the drive train.

This shows the disadvantage that a hub can only be used for a single type of wind turbine, and a new type of hub needs to be developed for every new type of wind turbine.

The aim of the invention is therefore to provide an improved concept how to adapt a hub to different types of wind turbines.

The object of the invention is achieved by the independent claim 1. Further features of the invention are disclosed in the dependant claims.

A wind turbine hub arrangement is disclosed comprising a hub whereby the hub comprises a connection face to be connected to a drive train of a wind turbine.

The arrangement comprises an adaptor plate whereby the first connection area of the adaptor plate is connected to the connection face of the hub and a second connection area of the adaptor plate is prepared to be connected to the drive train of the wind turbine.

A hub comprises a connection face to connect the hub to a wind turbine drive train. The connection face can be a flange surface, for example, and the hub can be bolted to the drive train.

A hub is normally designed and thus optimized for a special type of wind turbine. During the development of a new type of a wind turbine, the wind turbine needs to be tested and certified. Therefore the wind turbine needs to be erected and operated to get the certification.

For the operation of the wind turbine a hub is needed to be connected to the nacelle. Thus, for every new type of wind turbine a new type of hub needs to be designed.

To accelerate the test and certification of a new type of wind turbine a hub of a different type of wind turbine can be used to operate the wind turbine and get the certification.

To connect a hub of a different type of wind turbine to the wind turbine to be tested and certified, the wind turbine hub arrangement comprises an adaptor plate that is connected to the hub. The adaptor plate comprises a first connection area and a second connection area.

The first connection area of the adaptor plate is connected to the connection face of the hub, and the second connection area of the adaptor plate is prepared to be connected to the drive train of the wind turbine.

Thus, a hub can be adapted to be connected to a drive train of a wind turbine. Thus, no specially designed and optimized hub is needed to operate the wind turbine for a test and certification. Thus, the development of a new wind turbine can be accelerated.

In addition, test and certification of a new type of wind turbine is less expensive.

The adaptor plate comprises a mainly circular shape in a cross section, and the first and the second connection area comprises a mainly ring shaped surface.

The adaptor plate is a round plate and thus shows a mainly circular shape in a cross section vertical to the axis of rotation.

The adaptor plate comprises a first connection area to be connected to the hub, and the first connection area comprises a surface that is mainly ring shaped.

The circular adaptor plate comprises a second connection area, and the second connection area is prepared and arranged to be connected to the drive train of a wind turbine and comprises a mainly ring shaped surface.

The adaptor plate may comprise an opening in the middle that allows personnel to access the interior of the hub though the adaptor plate.

Thus, the use of material is optimized to prepare the adaptor plate. In addition, the adaptor plate only needs a minimum space to be arranged between the hub and the drive train.

The first and the second connection area of the adaptor plate are oriented mainly vertically to the axis of rotation of the adaptor plate.

Thus, the adaptor plate can be attached to the flange connection of the hub and the flange connection of the drive train of the wind turbine.

The inner diameter of the ring shaped first connection area of the adaptor plate is bigger than the outer diameter of the second connection area.

Thus, a difference in the diameter of the flange of the hub and the flange of the drive train can be bridged by the adaptor plate.

Thus, a hub comprising a flange bigger in size than the flange of the drive train can be connected to the drive train of a wind turbine using the adaptor plate.

The adaptor plate comprises an offset in its cross section along its axis of rotation to achieve a certain pre-determined mounting position of the hub along the axis of rotation in respect to the second connection area to be connected to the drive train.

The adaptor plate is designed in a way to achieve a certain pre-determined mounting position of the hub in respect the drive train. To achieve a certain mounting position the adaptor plate shows an offset along the axis of rotation.

Thus, the first connection area that is connected to the hub and the second connection area that is connected to the drive train are arranged in a certain pre-determined position in respect to each other, depending on the design of the offset of the adaptor plate.

Thus, certain mounting requirements of the hub in respect to the drive train can be suited. Thus, a hub of a different type of wind turbine can be adapted to a certain drive train.

The offset is achieved by two ring shaped bends in the adaptor plate that are connected by an intermediate annular part of the plate, so that the cross section of the adaptor plate in the direction of the axis of rotation comprises a Z-shaped form.

The adaptor plate comprises two ring shaped bends and an intermediate annular part. Thus, seen in a cross section along the axis of rotation, the adaptor plate shows two bends and an intermediate part in between the two bends. Thus, the plate shows in the cross section a Z-shaped form.

The two bends and the intermediate part are positioned between the first connection area and the second connection area. Thus, the position of the first connection area in respect to the second connection area can be designed depending on the form of the Z-shaped part of the adaptor plate.

Thus, the adaptor plate can be designed to suit a certain mounting requirement.

The first connection area and the second connection area lie mainly in the same plane perpendicular to the axis of rotation.

The offset in the adaptor plate can be designed in a way that the first and the second connection area of the adaptor plate lie within one and the same plane perpendicular to the axis of rotation.

Thus, also the surface of the flange of the hub and the surface of the flange of the drive train lie in the same plane perpendicular to the axis of rotation.

Thus, the mounting distance between the flange of the hub and the flange of the drive train, measured along the axis of rotation, is mainly zero.

Thus, the adaptor plate does not add any mounting distance, and thus length, in between the hub and the drive train.

The adaptor plate is prepared to be connected to a shaft of a geared wind turbine.

Thus, a hub can be adapted to be mounted to a shaft, and thus a drive train, of a geared wind turbine. Thus, a geared wind turbine can be tested and approved with a hub of a different type of wind turbine.

A hub of a direct driven wind turbine, for example, comprises a flange to be connected to a drive train of a direct driven wind turbine. The diameter of the flange of a hub of a direct driven wind turbine is often bigger than the diameter of the flange of the shaft of the geared wind turbine.

Thus, the difference in the diameter of the flanges needs to be adapted by an adaptor plate.

Thus, the hub of a direct driven wind turbine can be used at a geared wind turbine for test and certification, for example. Thus, no special hub needs to be designed for the test and approval of a geared wind turbine.

The outer diameter of the ring shaped first connection area of the adaptor plate is smaller than the inner diameter of the second connection area.

The first connection area of the adaptor plate is connected to the flange of the hub. The second connection area of the adaptor plate is connected to a flange of the drive train of the wind turbine.

The diameter of the first connection area is smaller than the inner diameter of the second connection area. Thus, a hub with a flange with a diameter that is smaller than the diameter of the flange of the drive train can be connected to the drive train of the wind turbine.

For example, a hub of a geared wind turbine comprises a flange with a diameter that is smaller than the diameter of the drive train of the direct driven wind turbine.

Thus, the diameter of the flanges can be adapted by using the adaptor plate. Thus, the hub of a geared wind turbine can be used for a test and certification of a direct driven wind turbine.

The adaptor plate comprises an offset in its cross section along its axis of rotation to achieve a certain pre-determined mounting position of the hub along the axis of rotation in respect to the second connection area to be connected to the drive train.

The adaptor plate comprises an offset in its cross section along its axis of rotation. The offset leads to a different position of the first connection area in respect to the second connection area. Thus by designing the adaptor plate to a certain mounting situation a pre-determined mounting position of the hub in respect to the drive train of the wind turbine can be achieved.

Thus, the adaptor plate can bridge a certain distance between the flange of the hub and the flange of the drive train of the wind turbine.

Thus, a certain hub and thereby a certain rotor of a wind turbine can be adapted to a different type of wind turbine to operate the wind turbine with a hub already available. Thus, no new hub has to be designed to test and certify the wind turbine.

The adaptor plate shows an L-shaped form in its cross section in the direction of the axis of rotation.

Due to the L-shaped form in the cross section in the direction of the axis of rotation a difference in the diameter of the flange is to be connected and also a certain distance in the mounting position of the flanges along the axis of rotation can be bridged by the adaptor plate.

The L-shaped form is achieved by a ring-shaped bend in the adaptor plate whereby the ring shaped adaptor plate bend has a radius at the inner surface of at least 10 centimeters.

The adaptor plate comprises a ring shaped bend. In a cross section along the axis of rotation of the adaptor plate the ring shaped bend in the plate leads to an L-shaped form.

The bend comprises a certain radius whereby the radius at the inner surface of the adaptor plate is at least 10 centimeters. Thus, there is no sharp bend in the adaptor plate that might lead to fatigue.

The adaptor plate is prepared to be connected to a direct driven wind turbine.

The flange and the drive train of a direct driven wind turbine comprise a big diameter.

A hub for a geared wind turbine comprises a flange with a small diameter.

The hub for the geared wind turbine can be connected to the adaptor plate to bridge the distance in the diameter between the flange of the hub and the flange of the drive train of the direct driven wind turbine.

Thus, a hub of a geared wind turbine can be used to operate a direct driven wind turbine. Thus, no special hub needs to be designed and manufactured to operate the direct driven wind turbine. Thus, production time and costs are saved.

An adaptor plate is disclosed to be used in a wind turbine hub arrangement.

A wind turbine comprises a wind turbine hub arrangement as disclosed.

The invention is shown in more detail by the help of figures. The figures show a preferred configuration and do not limit the scope of the invention.
- FIG 1: shows a first embodiment of a wind turbine hub arrangement,
- FIG 2: shows another embodiment of the wind turbine hub arrangement.

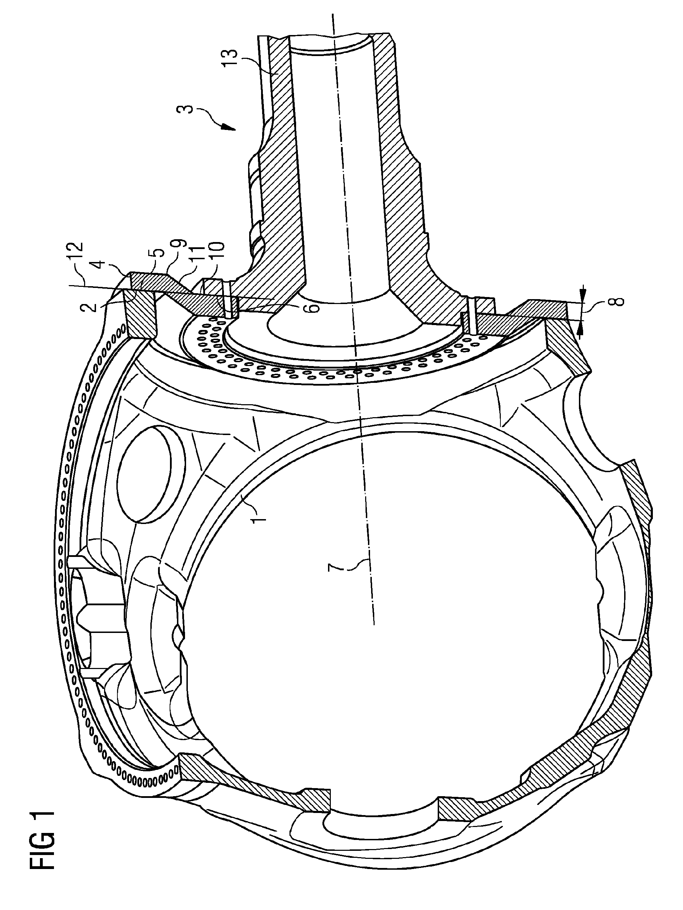

FIG 1 shows a first embodiment of a wind turbine hub arrangement.

The wind turbine hub arrangement comprises a hub 1 with a connection face 2. The connection face 2 is prepared to be connected to the drive train 3 of a wind turbine.

The wind turbine hub arrangement comprises an adaptor plate 4 that is connected to the hub 1. The adaptor plate 4 comprises a first connection area 5 that is connected to the connection face 2 of the hub 1. The adaptor plate 4 comprises a second connection area 6 that is prepared to be connected to the drive train 3 of a wind turbine.

In FIG 1 the adaptor plate 4 is connected to a shaft 13 of a geared wind turbine.

The first connection area 5 comprises a ring shaped surface with an inner diameter and an outer diameter. The second connection area 6 comprises also a ring shaped surface with an outer diameter and an inner diameter. The inner diameter of the first connection area 5 is bigger than the outer diameter of the second connection area 6.

Thus, the adaptor plate 4 closes a gap between the connection face 2 of the hub 1 and the connection area of a shaft 13 of the wind turbine.

In this embodiment the adaptor plate 4 comprises an offset in the axial direction between the first connection area and the second connection area. In a cross section along the axis of rotation 7 the adaptor plate 4 shows a Z-shaped form.

The cross section of the adaptor plate 4 shows a first ring shaped bend 9 and a second ring shaped bend 10 that are connected by an intermediate annular part 11. The offset 8 in the axial direction is important to bridge a mounting distance in axial direction, between the connection face 2 of the hub 1 and the shaft 13. The two ring shaped bends 9 and 10 and the intermediate annular part 11 create an offset 8 in axial direction.

With the offset 8 in axial direction as shown in FIG 1 the first connection area 5 and the second connection area 6 are arranged in the same plane 12 perpendicular to the axis of rotation 7.

Any other position of the second connection area 6 in respect to the first connection area 5 can be achieved by a different offset 8 of the adaptor plate 4.

Thus, a difference in the radius of the connection face 2 of the hub 1 and the connection area of the drive train 3 of the wind turbine, and in addition a difference in the mounting distance between the connection face 2 and the drive train 3 can be bridged by the adaptor plate 4.

Thus, a hub 1 designed for a different type of wind turbine can be adapted to another wind turbine to fit to the drive train 3.

In the case of the embodiment in FIG 1 a hub 1 designed for a direct driven wind turbine can be adapted to be connected to the shaft 13 of a geared wind turbine.

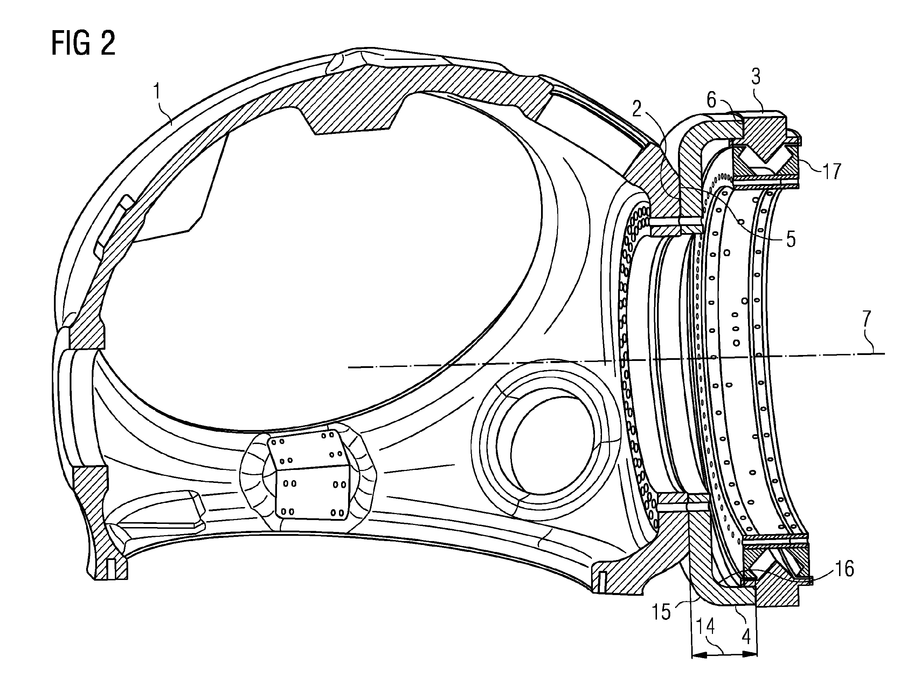

FIG 2 shows another embodiment of the wind turbine hub arrangement.

FIG 2 shows a second embodiment of the wind turbine hub arrangement. The wind turbine hub arrangement comprises a hub 1 and an adaptor plate 4. The adaptor plate 4 is connected to a connection face 2 of the hub 1 with a first connection area 5.

A second connection area 6 at the adaptor plate 4 is prepared to be connected to the drive train 3 of a wind turbine.

In this embodiment the drive train 3 of the wind turbine is the bearing 17 of a direct driven wind turbine.

Seen in a cross section along the axis of rotation 7, the adaptor plate 4 shows an L-shaped form. The adaptor plate 4 shows a ring shaped bend 15, with a certain radius 16 at the inner surface of the bend.

At the bend 15 the direction of the adaptor plate 4 changes from a radial direction to an axial direction. This leads to a certain offset 14 in axial direction of the adaptor plate 4.

A certain difference in the mounting distance between the hub 1 and the drive train 3 of the wind turbine can be bridged by the adaptor plate 4.

In addition, a certain difference in the radius of the connection face 2 of the hub 1 and the connection area at the drive train 3 of the wind turbine can be bridged.

Thus, a hub designed for another type of wind turbine can be adapted to fit to a direct driven wind turbine. In this embodiment a hub 1 designed to be attached to a geared wind turbine is equipped with the adaptor plate 4 and can then be attached to the drive train of a direct driven wind turbine.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Wind turbine hub arrangement, comprising a hub (1),
- whereby the hub comprises a connection face (2) to be connected to a drive train of a wind turbine,
- whereby the arrangement comprises an adaptor plate (4),
- whereby a first connection area (5) of the adaptor plate (4) is connected to the connection face (2) of the hub (3), and
- whereby a second connection area (6) of the adaptor plate (4) is prepared to be connected to the drive train (3) of the wind turbine.

2. Arrangement according to claim 1, **characterized in that** the adaptor plate (4) comprises a mainly circular shape in a cross section, and the first (5) and the second connection area (6) comprise a mainly ring shaped surface.

3. Arrangement according to claim 2, **characterized in that** the first (5) and second connection area (6) of the adaptor plate (4) are oriented mainly vertically to the axis of rotation (7) of the adaptor plate (4).

4. Arrangement according to claim 3, **characterized in that** the inner diameter of the ring shaped first connection (5) area of the adaptor plate (4) is bigger than the outer diameter of the second connection area (6).

5. Arrangement according to claim 4, **characterized in that** the adaptor plate (4) comprises an offset (8) in its cross section along its axis of rotation (7), to achieve a certain predetermined mounting position of the hub (1) along the axis of rotation (7) in respect to the second connection area (6) to be connected to the drive train (3).

6. Arrangement according to claim 5, **characterized in that** the offset (8) is achieved by two ring shaped bends (9, 10) in the adaptor plate (4) that are connected by an intermediate annular part (11) of the plate (4), so that the cross section of the adaptor plate (4) in the direction of the axis of rotation (7) comprises a Z-shaped form.

7. Arrangement according to one of the claims 5 to 6, **characterized in that** the first connection area (5) and the second connection area (6) lie mainly in the same plane perpendicular to the axis of rotation (7).

8. Arrangement according to one of the preceding claims, **characterized in that** the adaptor plate (4) is prepared to be connected to a shaft (13) of a geared wind turbine.

9. Arrangement according to claim 3, **characterized in that** the outer diameter of the ring-shaped first connection area (5) of the adaptor plate (4) is smaller than the inner diameter of the second connection area (6).

10. Arrangement according to claim 9, **characterized in that** the adaptor plate (4) comprises an offset in its cross section along its axis of rotation (7), to achieve a certain predetermined mounting position of the hub (1), along the axis of rotation (7), in respect to the second connection area (6) to be connected to the drive train (3).

11. Arrangement according to claim 10, **characterized in that** the adaptor plate (4) shows an L-shaped form in the cross section in the direction of the axis of rotation (7).

12. Arrangement according to claim 11, **characterized in that** the L-shaped form is achieved by a ring-shaped bend (15) in the adaptor plate (4), whereby the ring-shaped bend (15) has a radius at the inner surface (16) of at least 10 cm.

13. Arrangement according to one the claims 9 to 12, **characterized in that** the adaptor plate (4) is prepared to be connected to a direct driven wind turbine (17).

14. Adaptor plate (4) to be used in a wind turbine hub arrangement according to one of the preceding claims.

15. Wind turbine comprising a wind turbine hub arrangement according to one of the claims 1 to 13.
